(19) Europäisches Patentamt
European Patent Office
Office européen des brevets

(11) **EP 2 093 115 B1**

(12) **EUROPEAN PATENT SPECIFICATION**

(45) Date of publication and mention
of the grant of the patent:
**05.01.2011 Bulletin 2011/01**

(51) Int Cl.:
**B60T 8/172** (2006.01)        **B60T 8/1755** (2006.01)

(21) Application number: **08003319.4**

(22) Date of filing: **23.02.2008**

(54) **Method for estimating vehicle track-keeping stability**

Verfahren zur Schätzung der Spurhaltungsstabilität eines Fahrzeugs

Procédé d'évaluation de la stabilité de suivi de piste d'un véhicule

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**26.08.2009 Bulletin 2009/35**

(73) Proprietor: **GM Global Technology Operations, Inc.**
**Detroit, MI 48265-3000 (US)**

(72) Inventors:
• **Trönnberg, Gabriel**
**46375 Hjärtum (SE)**
• **Alfredsson, Samuel**
**46042 Frändefors (SE)**

(74) Representative: **Strauss, Peter**
**Adam Opel GmbH**
**Patentrecht, A0-02**
**65423 Rüsselsheim (DE)**

(56) References cited:
**DE-A1- 10 215 464**        **US-A- 5 862 503**
**US-A1- 2003 130 775**      **US-A1- 2007 112 474**

**Description**

The present invention relates to a method for estimating the stability and/or controllability of a vehicle in motion, specifically for judging the track-keeping capacity of a motor vehicle when cornering.

It is known that under the influence of a lateral force, particularly the centrifugal force during cornering, the direction in which the wheels of the vehicle move may not be perpendicular to the wheel axles. The deviation between the direction perpendicular to the wheel axles and the effective direction of propagation is referred to as side-slip angle.

Methods for estimating the side-slip angle of a vehicle are known e.g. from US 2007/0112474 A1 and US 2003/0130775 A1.

At low lateral forces, the side-slip angle is directly proportional to the lateral force. At high lateral forces, this proportionality is no longer valid; the side-slip angle grows very fast with increasing lateral force and will diverge when the lateral force exceeds a certain threshold and the wheels begin to slide. If this happens, control over the vehicle is lost. It is difficult to predict this threshold since it depends on the friction coefficient between tire and road.

It is therefore highly desirable to have a simple and efficient method for quantitatively estimating the track-keeping stability of a vehicle in motion in real time. The result of such a method might be used for warning a driver of a potentially dangerous situation before it becomes critical or for triggering automatic stabilizing operations.

The present invention provides a particularly simple and efficient method for estimating a quantity representative of the track-keeping stability, namely the instantaneous tire stiffness, which comprises the following steps:

a) providing a plurality of characteristics, each of the characteristics specifying a stability index as a function of at least one of the following variables:

- the effective vehicle lateral acceleration,
- the effective vehicle yaw rate,
- the difference between effective and expected vehicle lateral accelerations,
- the difference between effective and expected vehicle yaw rates,
- the product of a steering wheel angle and vehicle longitudinal velocity,

the characteristics being continuous functions and having a first argument range in which they are linear and second and third argument ranges adjacent to said first range in which they are constant;
b) measuring current values of the variables of each characteristic;
c) determining the stability indices associated to said current values using said characteristics, and
d) calculating a sum of said stability indices.

It was found that by judiciously optimizing the above-mentioned characteristics, a stability-related quantity can be obtained, which is continuously variable and based on the numerical value of which driving conditions which would cause loss of control over the vehicle can be reliably predicted, so that appropriate countermeasures can be taken before control over the vehicle is actually lost.

In order to facilitate the optimization of the characteristics, each characteristic should have the smallest possible number of variables. If the constant value e.g. in the third range is set to zero, each characteristic is specified completely by three parameters, e.g. by the borders of the first range and constant value of the characteristic in the second range, by its value at a predetermined argument in the first range, its slope in the first range and the constant value in the second range, or others.

The above mentioned sum of the stability indices can be used directly as the instantaneous tire stiffness; preferably, the instantaneous tire stiffness is calculated as a monotonic non-linear function of the sum obtained in step D, the derivative of the function being higher in a range of said sum which is indicative of low track-keeping stability than in a range which is indicative of high track-keeping stability. In this way, a given variation of the sum will cause a larger variation of the instantaneous tire stiffness when stability is low than when it is high, so that a condition where stability drops below a critical threshold can be determined with high accuracy.

Under slalom driving conditions, i.e. when a vehicle is going through curves in quickly alternating directions, there is an instant of each change of the cornering direction where the effective vehicle lateral acceleration and yaw rate become zero, which might cause the method to detect good stability in spite of the tires being under a substantial load. In order to prevent an overestimation of the stability under such circumstances, it is advisable to filter at least one of the measured input variable and to use the filtered input variable as an argument for one of the characteristics.

Preferably, the step of filtering a measured input variable comprises the sub-steps of determining the rate of change of the steering wheel angle, of sampling the input variable and of replacing the measured input variable value by the sampled variable value while the rate of change exceeds the predetermined threshold.

The replacing step is preferably carried out only if the steering wheel is approaching its neutral position.

The invention may be embodied also in the form of a data processor program product comprising a data carrier in which program instructions for enabling a data processor to carry out the method defined above are recorded in machine readable form.

A device for estimating a track-keeping stability-related quantity in a motor vehicle comprises

a) memory for storing a plurality of characteristics, each of the characteristics specifying a stability index as a function of at least one of the following variables:

- the effective vehicle lateral acceleration,
- the effective vehicle yaw rate,
- the difference between effective and expected vehicle lateral accelerations,
- the difference between effective and expected vehicle yaw rates,
- the product of steering wheel angle and vehicle longitudinal velocity;

the characteristics having a first argument range in which they are linear functions;
b) an input port for receiving values of the input variables of each characteristic;
c) means for determining the stability index values associated to said input variable values using said characteristics, and
d) means for calculating a sum of said stability index values.

Further features and advantages of the invention will become apparent from the subsequent description of embodiments thereof referring to the appended drawings.

Fig. 1 is a block diagram of a device for estimating a track-keeping stability-related quantity according to the present invention;

Fig. 2 is an exemplary plot of measured lateral acceleration data as a function of time;

Fig. 3 is a plot illustrating pre- processed and filtered lateral acceleration data;

Fig. 4 is a plot illustrating a waveform of measured side-slip angles corresponding to the lateral acceleration data illustrated in fig. 2, and a waveform of side-slip angles estimated based on the acceleration data of fig. 2 assuming constant tire stiffness; and

Fig. 5 is a plot illustrating the same waveform of measured side-slip angles as in Fig. 4 and a waveform of side-slip angles estimated based on the acceleration data of fig. 2 assuming calculated assuming variable tire stiffness.

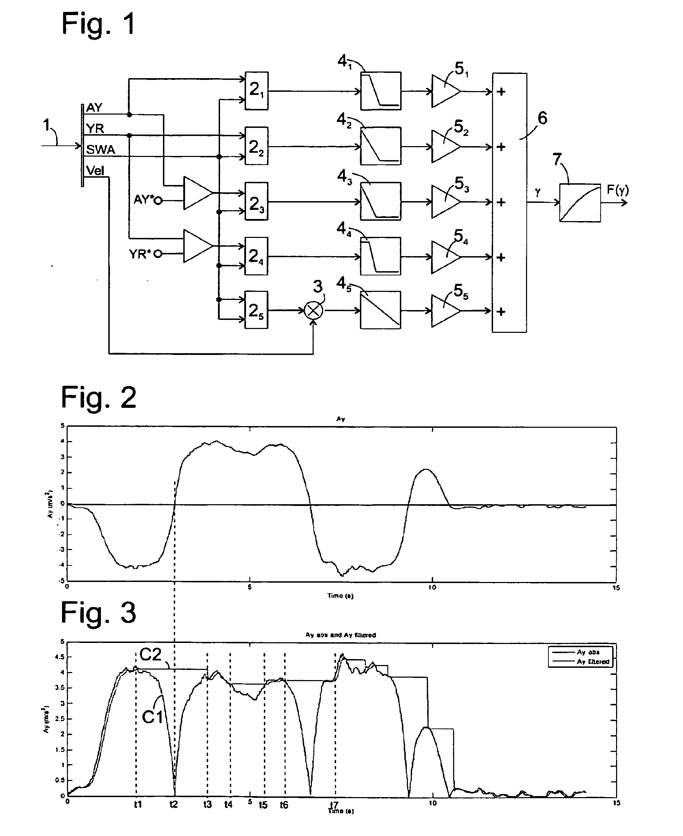

Fig. 1 is a block diagram of a device for estimating a track-keeping stability-related quantity in a motor vehicle according to the present invention. The blocks in the block diagram can be thought of as being implemented in hardware circuitry, but it will be immediately apparent to a skilled person that any of them may be implemented as well by software in a microprocessor system.

The device of fig. 1 is connected to a conventional digital data bus of a motor vehicle, e.g. a CAN bus. Via the CAN bus 1, the device receives input data, namely vehicle lateral acceleration AY, yaw rate YR, steering wheel angle SWA and vehicle longitudinal velocity Vel from appropriate sensors, not shown. All these variables are conventionally available in real time on a vehicle CAN bus. The device comprises five filters $2_1$ to $2_5$, all of identical design. Each of the filters $2_1$ to $2_5$ has a control input which receives steering wheel angle data SWA from bus 1. A data input of filter $2_1$ receives the lateral acceleration data AY. A data input of filter $2_2$ receives the yaw rate data YR. A data input of filter $2_3$ receives a first error signal representing the difference between the measured lateral acceleration AY and an expected lateral acceleration AY* which is calculated assuming that the vehicle is circulating at its measured longitudinal velocity Vel on a circular track, the radius of which is associated to the measured steering wheel angle SWA. The first error signal may thus be said to be representative of a discrepancy between the actual trajectory of the vehicle and the trajectory the driver wants the vehicle to follow.

Similarly, a desired yaw rate YR* is calculated based on the steering wheel angle SWA and the vehicle longitudinal velocity Vel, and a discrepancy between it and the measured yaw rate YR is input in the filter $2_4$ as a second error signal.

Filter $2_5$ has the steering wheel angle signal SWA applied to it at its data input and at its control input.

Fig. 2 is an exemplary plot of lateral acceleration data input into filter $2_1$ during a slalom driving manoeuvre. As can be seen, the vehicle is cornering in a first direction from time = 1s to time = 3s, it is cornering in the opposite direction from time = 3s to time = 7s, it is cornering in the first direction again from time = 7s to time = 9s, and so on. In a first processing step, the filter $2_1$ forms the absolute value |AY| of the input data AY, represented by curve C1 in fig. 3. While the steering wheel is being rotated away from its neutral position, i.e. while the amount of SWA increases, the output of filter $2_1$, represented by curve C2, follows the curve C1 closely, e.g. from time = 0 to time = t1 $\cong$ 2s. At time t1, the filter $2_1$ detects that the rate of decrease of |SWA| exceeds a predetermined threshold. It then samples the input C1 at t1 and outputs it as C2 until the rate of change of |SWA| drops below the threshold again at time t3. The zero crossing of AY at time t2 is suppressed in the output C2 of filter $2_1$.

Other time intervals where fluctuations of the lateral acceleration due to rapid steering manoeuvres of the driver are suppressed in the output signal C2 are from t4 to t5, t6 to t7, and so on.

The effect of the filters $2_2$ to $2_5$ on the yaw rate signal YR, the error signals and the steering wheel angle signal SWA is similar to what is described above for the lateral acceleration AY and need therefore not be described in detail.

While lateral acceleration, yaw rate and error signals are quite closely related to tire stress, the steering wheel angle signal SWA is not, since a large steering wheel angle at low speed does not necessarily imply a higher load on the tires than a small steering wheel angle at high speed. Therefore, in order to obtain a quantity better related to the tire stress, the output of filter $2_5$ is multiplied with the vehicle speed Vel in a multiplier 3.

Output data from filters $2_1$ to $2_4$ and multiplier 3 are applied as address data to look-up tables $4_1$ to $4_5$. Each look-up table $4_i$, i=1, ..., 5, stores a characteristic function $f_i$ which can take values from 1 to 0, which has at least a first range of arguments in which it is linear, and which equals either 1 or 0 in second or third argument ranges adjacent to said first range. In other words, the characteristic function may be written as

$$f_i(x) = \begin{cases} 1 & if & x < (b_i - 1)/a_i \\ -a_i x + b_i & if & (b_i - 1)/a_i \le x < b_i/a_i \\ 0 & if & b_i/a_i < x \end{cases}$$

wherein $a_i > 0$, $b_i > 1$, and x is the output of filter $2_i$, i=1, ..., 4 or multiplier 7, as appropriate.

The output of each look-up table $4_i$ is weighted by a predetermined weighting factor $w_i$ in a multiplier $5_i$. The weighting factors are predetermined so that

$$\sum_i w_i = 1$$

holds.

It is readily apparent that the multipliers $5_i$ might be dispensed with by storing in the look-up tables $4_i$ characteristic functions $w_i * f_i(x)$ instead of $f_i(x)$, as described above.

The outputs of the multipliers $5_i$ are summed in adder 6. The output $\gamma$ of adder 6 is referred to here as the tire degree of linearity $\gamma$. It can take any value from 0 to 1. If $\gamma$ is close to 1, the behaviour of the tire can be regarded as linear, i.e.

$$F_y(t) = C\alpha(t)$$

with C=constant is a good approximation for the relation between the side-slip angle $\alpha$ of the tire and the lateral force $F_y$ to which the tire is subject. The smaller $\gamma$ is, the less exact is the approximation, and if $\gamma$ approaches zero, the tire is losing hold, and the vehicle is becoming unstable. The constant C is different for front and rear tires.

Provided that the weighting factors $w_i$ in multipliers $5_i$ and the first ranges $(b_i - 1)/a_i \le x < b_i/a_i$ of the characteristics in the look-up tables $4_i$ are well optimized, the tire degree of linearity $\gamma$ is very closely correlated to the instantaneous tire stiffness, so that a good approximation of the tire stiffness can be obtained by multiplying $\gamma$ by a constant factor.

A still better approximation can be achieved if the tire degree of linearity $\gamma$ is applied as an argument to a further characteristic F($\gamma$) in look-up table 7. The characteristic F($\gamma$) in look-up table 7 is a monotonically increasing function with decreasing slope, e.g. a portion of a parabola. Due to the decreasing slope of the characteristic F($\gamma$), a predetermined variation in $\gamma$ will cause a rather small fluctuation in the output F($\gamma$) of look-up table 7 when $\gamma$ is high, i.e. when the stability of the vehicle is high and the tires have tight hold on the road. When $\gamma$ is low, however, the predetermined variation causes a larger variation in the output of look-up table 7, so that in a situation where the stability of the vehicle is reduced, a clearly detectable variation is output from look-up table 7

### EP 2 093 115 B1

The effectiveness of the device of Fig. 1 might be tested by obtaining experimental data of the tire stiffness for a given type of motor vehicle at a large number of different values of AY, YR, SWA and Vel, and fitting the characteristics in look-up tables $2_1$, ..., $2_5$, and 7, so that the correlation between the output $F(\gamma)$ of look-up table 7 for a given set of values of AY, YR, SWA, Vel and the measured tire stiffness at these same values is maximized.

In fact, optimization and a test for the effectiveness of the device were carried out in a slightly different way: The vehicle side-slip angle β was determined experimentally for a large number of different values of AY, YR, SWA and Vel. From $F(\gamma)$, an estimated tire stiffness $C_{est}$ was derived using the equation

$$C_{est} = C_0 \; F(\gamma)$$

with $C_0$=constant. This estimated tire stiffness $C_{est}$ was input into a conventional Kalman filter-based observer for calculating an estimated vehicle side-slip angle β* at said different values of AY, YR, SWA and Vel. The parameters of the characteristics in look-up tables $4_i$ and 7 were fitted so as to optimize the agreement between the calculated values β* of the side-slip angle and experimentally determined values of b at said different values of AY, YR, SWA and Vel.

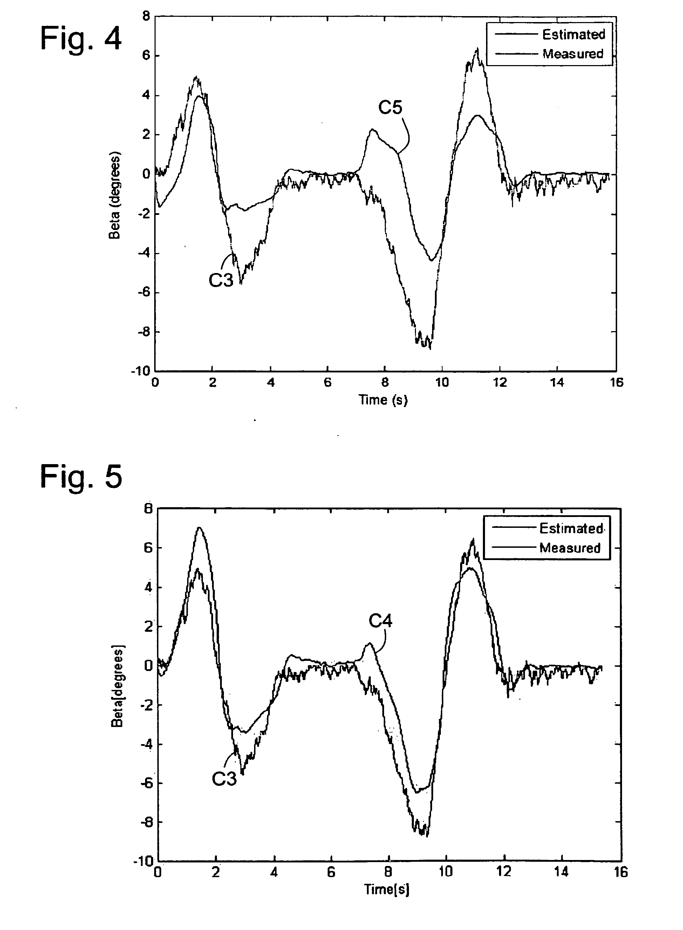

Side-slip angles β were also measured during the trajectory that gave the lateral acceleration data of Fig. 2. Tire stiffness data and Side-slip data β* were calculated for this trajectory using the optimized characteristics. In Fig. 5, a curve C3 represents the measured side-slip angles β, and a curve C4 illustrates side-slip angles β* estimated by the observer. Agreement between the two curves is good. There is hardly any delay between corresponding peaks of the two curves, and the difference between the peak values is not more than approximately 30%. There is no long-term drift of the estimated side-slip angles.

In contrast, a curve C5 in Fig. 4 plots side-slip angles estimated by the same observer using a constant value of the tire stiffness. There are peaks in C5 which have no counterpart in the measured curve C3, and the discrepancy between the peaks of the measured curve C3 and a corresponding peak of the estimated side-slip angle curve C5 is up to 60%.

**List of reference signs**

1    CAN bus
2    Filter
3    Multiplier
4    Look-up table
5    Multiplier
6    Adder
7    Look-up table

**Claims**

1.  A method for estimating a quantity representative of the track-keeping stability of a motor vehicle, namely the instantaneous tire stiffness ($\gamma$; $F(\gamma)$), comprising the steps of

    a) providing a plurality of characteristics ($f_i(x)$, i=1, 2, ..., 5), each of the characteristics ($f_i(x)$) specifying a stability index as a function of at least one of the following variables (x):

    - the effective vehicle lateral acceleration (AY),
    - the effective vehicle yaw rate (YR),
    - the difference between effective (AY) and expected (AY*) vehicle lateral accelerations,
    - the difference between effective (YR) and expected (YR*) vehicle yaw rates,
    - the product of steering wheel angle (SWA) and vehicle longitudinal velocity (Vel);

    the characteristics ($f_i(x)$) being continuous functions and having a first argument range in which they are linear and second and third argument ranges adjacent to said first range in which they are constant;
    b) measuring values of the input variables (AY, YR, AY-AY*, YR-YR*, SWA) of each characteristic;
    c) determining values of the stability indices associated to said input parameter values using said characteristics

$(f_i(x))$,

d) calculating a sum ($\gamma$) of said stability indices, and using the sum directly as the instantaneous tire stiffness ($\gamma$; $F(\gamma)$).

2. The method of claim 1, wherein the instantaneous tire stiffness ($F(\gamma)$) is calculated as a monotonic non-linear function (F) of the sum ($\gamma$) obtained in step d), the derivative ($dF/d_g$) of the function (F) being higher in a range of said sum ($\gamma$) indicative of low track-keeping stability than in a range indicative of high track-keeping stability.

3. The method of any of the preceding claims, wherein step c) comprises steps of filtering at least one of said measured input variables (AY, YR, AY-AY*, YR-Y·R*, SWA) and of using said filtered input variable as an argument for one of said characteristics ($f_i(x)$).

4. The method of claim 4, wherein the step of filtering said measured input variable (AY, YR, AY-AY*, YR-YR*, SWA) comprises the sub-steps of determining the rate of change of the steering wheel angle (SWA), of sampling the input variable and of replacing the measured input variable value by the sampled variable value while the rate of change exceeds a predetermined threshold.

5. The method of claim 5, wherein the replacing step is carried out only if the steering wheel is approaching its neutral position.

6. A data processor program product comprising a data carrier in which program instructions for enabling a data processor to carry out the method of one of claims 1 to 6 are recorded in machine-readable form.

7. A device for estimating a quantity representative of the track-keeping stability of a motor vehicle, namely the instantaneous tire stiffness, comprising

a) memory ($2_1$, ..., $2_5$) for storing a plurality of characteristics ($f_i$), each of the characteristics ($f_i$) specifying a stability index as a function of at least one of the following variables:

- the effective vehicle lateral acceleration (AY),
- the effective vehicle yaw rate (YR),
- the difference between effective (AY) and expected (AY*) vehicle lateral accelerations,
- the difference between effective (YR) and expected (YR*) vehicle yaw rates,
- the product of steering wheel angle (SWA) and vehicle longitudinal velocity (Vel);

the characteristics ($f_i$) being continuous functions and having a first argument range in which they are linear and second and third argument ranges adjacent to said first range in which they are constant;
b) an input port (1) for receiving input variable values of each characteristic ($f_i$);
c) means (2-5) for determining the stability indices associated to said input variables (AY, YR, AY-AY*, YR-YR*, SWA) using said characteristics ($f_i$),
d) means (6) for calculating a sum of said stability indices and
e) means for using the sum as the instantaneous tire stiffness.

**Patentansprüche**

1. Verfahren zur Schätzung einer Quantität, die stellvertretend für die Spurhaltestabilität eines Kraftfahrzeugs ist, namentlich der augenblicklichen Reifensteifheit ($\gamma$; $F(\gamma)$), wobei das Verfahren folgende Schritte umfasst:

a) Bereitstellen einer Mehrzahl von Merkmalen ($f_i(x)$, i=1, 2, ..., 5), wobei jedes der Merkmale ($f_i(x)$) einen Stabilitätsindex als Funktion mindestens einer der nachstehenden Variablen (x) festlegt:

- die effektive Seitenbeschleunigung (AY) des Fahrzeugs,
- die effektive Gierrate (YR) des Fahrzeugs,
- die Differenz zwischen der effektiven (AY) und der erwarteten (AY*) Seitenbeschleunigung des Fahrzeugs,
- die Differenz zwischen der effektiven (YR) und der erwarteten (YR*) Gierrate des Fahrzeugs,
- das Produkt aus Lenkradwinkel (SWA) und Längsgeschwindigkeit des Fahrzeugs (Vel);

wobei die Merkmale ($f_i(x)$) kontinuierliche Funktionen sind und einen ersten Argumentbereich aufweisen, in dem sie linear sind, und zweite und dritte Argumentbereiche angrenzend an den ersten Argumentbereich, in dem sie konstant sind;

b) Messen von Werten der Eingangsvariablen (AY, YR, AY-AY*, YR-YR*, SWA) jedes Merkmals;

c) Bestimmen von Werten der Stabilitätsindizes in Verbindung mit den Eingangsparameterwerten unter Anwendung der Merkmale ($f_i(x)$),

d) Berechnen einer Summe ($\gamma$) der Stabilitätsindizes und Verwenden der Summe unmittelbar als augenblickliche Reifensteifheit ($\gamma$; F($\gamma$).

2. Verfahren gemäß Anspruch 1, wobei die augenblickliche Reifensteifheit (F($\gamma$)) berechnet wird als monotone nichtlineare Funktion (F) der in Schritt d) ermittelten Summe ($\gamma$), wobei die Ableitung ($dF/d_g$) der Funktion (F) höher ist in einem Bereich der Summe ($\gamma$), die indikativ für eine geringe Spurhaltestabilität ist, als in einem Bereich, der indikativ für eine hohe Spurhaltestabilität ist.

3. Verfahren gemäß einem der vorangehenden Ansprüche, wobei Schritt c) die Schritte der Filterung mindestens einer der gemessenen Eingangsvariablen (AY, YR, AY-AY*, YR-YR*, SWA) und der Verwendung der gefilterten Eingangsvariable als Argument für eines der Merkmale ($f_i(x)$) umfasst.

4. Verfahren gemäß Anspruch 4, wobei der Schritt der Filterung der gemessenen Eingangsvariable (AY, YR, AY-AY*, YR-YR*, SWA) die Teilschritte der Bestimmung der Änderungsgeschwindigkeit des Lenkradwinkels (SWA), des Samplings der Eingangsvariable und des Ersetzens des gemessenen Eingangsvariablenwerts durch den gesampelten Variablenwert, während die Änderungsgeschwindigkeit einen bestimmten Schwellwert übersteigt, umfasst.

5. Verfahren gemäß Anspruch 5, wobei der Ersetzungsschritt nur dann ausgeführt wird, wenn das Lenkrad sich seiner Neutralstellung nähert.

6. Datenverarbeitungsprogrammprodukt, das einen Datenträger umfasst, auf dem Programmbefehle in maschinenlesbarer Form aufgezeichnet sind, um einem Datenprozessor das Ausführen des Verfahrens eines der Ansprüche 1 bis 6 zu ermöglichen.

7. Vorrichtung zur Schätzung einer Quantität, die stellvertretend für die Spurhaltestabilität eines Krafttahrzeugs ist, namentlich der augenblicklichen Reifensteifheit, Folgendes umfassend:

a) Speicher ($2_1$ ...., $2_5$) zum Speichern einer Mehrzahl von Merkmalen ($f_i$), wobei jedes der Merkmale ($f_i$) einen Stabilitätsindex als Funktion mindestens einer der nachstehenden Variablen festlegt:

- die effektive Seitenbeschleunigung (AY) des Fahrzeugs,
- die effektive Gierrate (YR) des Fahrzeugs,
- die Differenz zwischen der effektiven (AY) und der erwarteten (AY*) Seitenbeschleunigung des Fahrzeugs,
- die Differenz zwischen der effektiven (YR) und der erwarteten (YR*) Gierrate des Fahrzeugs,
- das Produkt aus Lenkradwinkel (SWA) und Längsgeschwindigkeit des Fahrzeugs (Vel);

wobei die Merkmale ($f_i$) kontinuierliche Funktionen sind und einen ersten Argumentbereich aufweisen, in dem sie linear sind, und zweite und dritte Argumentbereiche angrenzend an den ersten Argumentbereich, in dem sie konstant sind;

b) einen Eingangsanschluss (1) zum Empfangen von Eingangsvariablenwerten der einzelnen Merkmale ($f_i$);

c) Mittel (2-5) zur Bestimmung der Stabilitätsindizes in Verbindung mit den Eingangsvariablen (AY, YR, AY-AY*, YR-YR*, SWA) unter Anwendung der Merkmale ($f_i$);

d) Mittel (6) zum Berechnen einer Summe der Stabilitätsindizes, und

e) Mittel zur Verwendung der Summe als augenblickliche Reifensteifheit.

## Revendications

1. Procédé pour estimer une quantité représentative de la stabilité de trajectoire d'un véhicule à moteur, à savoir la rigidité instantanée des pneumatiques ($\gamma$ ; F($\gamma$)), comprenant les étapes suivantes :

a) production d'une pluralité de caractéristiques ($f_i(x)$, i=1, 2, ..., 5), chacune des caractéristiques ($f_i(x)$) spécifiant

un indice de stabilité en fonction d'au moins une des variables (x) suivantes :

- accélération latérale effective du véhicule (AY),
- amplitude de lacet effective du véhicule (YR),
- différence entre l'accélération latérale effective (AY) et attendue (AY*) du véhicule,
- différence entre l'amplitude de lacet effective (YR) et attendue (YR*) du véhicule,
- produit de l'angle du volant (SWA) et de la vitesse longitudinale du véhicule (Vel) ;

les caractéristiques ($f_i$(x)) étant des fonctions continues et ayant une première plage d'arguments dans laquelle elles sont linéaires et des deuxième et troisième plages d'arguments adjacentes à ladite première plage dans laquelle elles sont constantes ;
b) mesure de la valeur des variables d'entrée (AY, YR, AY-AY*, YR-YR*, SWA) de chaque caractéristique ;
c) détermination des valeurs des indices de stabilité associés auxdites valeurs de paramètres d'entrées à l'aide desdites caractéristiques ($f_i$(x)),
d) calcul d'une somme ($\gamma$) desdits indices de stabilité et utilisation de la somme directement comme rigidité instantanée des pneumatiques ($\gamma$ ; F($\gamma$)).

**2.** Procédé selon la revendication 1, dans lequel la rigidité instantanée des pneumatiques (F($\gamma$)) est calculée comme une fonction non linéaire monotone (F) de la somme ($\gamma$) obtenue dans l'étape d), la dérivée (dF/dg) de la fonction (F) étant plus grande dans une plage de ladite somme ($\gamma$) indiquant une faible stabilité de trajectoire que dans une plage indiquant une grande stabilité de trajectoire.

**3.** Procédé selon l'une quelconque des revendications précédentes, dans lequel l'étape c) comprend des étapes de filtrage d'au moins une desdites variables d'entrée mesurées (AY, YR, AY-AY*, YR-YR*, SWA) et d'utilisation de ladite variable d'entrée filtrée comme argument pour l'une desdites caractéristiques ($f_i$(x)).

**4.** Procédé selon la revendication 4, dans lequel l'étape de filtrage de ladite variable d'entrée mesurée (AY, YR, AY-AY*, YR-YR*, SWA) comprend les sous-étapes de détermination de la vitesse de changement de l'angle du volant (SWA), d'échantillonnage de la variable d'entrée et de remplacement de la valeur de la variable d'entrée mesurée par la valeur de la variable échantillonnée pendant que la vitesse de changement dépasse un seuil prédéterminé.

**5.** Procédé selon la revendication 5, dans lequel l'étape de remplacement n'est exécutée que si le volant approche de sa position neutre.

**6.** Programme de traitement de données comprenant un support de données dans lequel des instructions de programme permettant à un processeur de données d'exécuter le procédé selon l'une des revendications 1 à 6 sont enregistrées sous une forme pouvant être lue par une machine.

**7.** Dispositif pour estimer une quantité représentative de la stabilité de trajectoire d'un véhicule à moteur, à savoir de la rigidité instantanée des pneumatiques ($\gamma$ ; F($\gamma$)), comprenant :

a) une mémoire ($2_1$, ..., $2_5$) destinée à stocker une pluralité de caractéristiques ($f_i$), chacune des caractéristiques ($f_i$) spécifiant un indice de stabilité en fonction de l'une au moins des variables suivantes :

- accélération latérale effective du véhicule (AY),
- amplitude de lacet effective du véhicule (YR),
- différence entre l'accélération latérale effective (AY) et attendue (AY*) du véhicule,
- différence entre l'amplitude de lacet effective (YR) et attendue (YR*) du véhicule,
- produit de l'angle du volant (SWA) et de la vitesse longitudinale du véhicule (Vel) ;

les caractéristiques ($f_i$) étant des fonctions continues et ayant une première plage d'arguments dans laquelle elles sont linéaires et des deuxième et troisième plages d'arguments adjacentes à ladite première plage dans laquelle elles sont constantes ;
b) un port d'entrée (1) pour recevoir des valeurs de variables d'entrées de chaque caractéristique ($f_i$) ;
c) des moyens (2-5) pour déterminer les indices de stabilité associés auxdites variables d'entrée (AY, YR, AY-AY*, YR-YR*, SWA) à l'aide desdites caractéristiques ($f_i$),
d) des moyens (6) pour calculer une somme desdits indices de stabilité ; et
e) des moyens pour utiliser la somme comme rigidité instantanée des pneumatiques.

## Fig. 1

## Fig. 2

## Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070112474 A1
- US 20030130775 A1